# NEUE EUROPÄISCHE PATENTSCHRIFT

(11) **EP 0 270 497 B2**
(45) Veröffentlichungstag und Bekanntmachung des Hinweises auf die Entscheidung über den Einspruch: **02.05.1997**
(45) Hinweis auf die Patenterteilung: 13.03.1991
(21) Anmeldenummer: 87810707.7
(22) Anmeldetag: 01.12.1987
(51) Int. Cl.: A21C 3/02

(54) **Verfahren zum Ausrollen von Teig**
Dough-rolling method
Méthode de roulage de la pâte

(30) Priorität: 03.12.1986 DE 3641286
(43) Veröffentlichungstag der Anmeldung: 08.06.1988
(73) Patentinhaber: SEEWER AG, CH-3400 Burgdorf (CH)
(72) Erfinder: Morgenthaler, Eugen, CH-3422 Kirchberg (CH)
(74) Vertreter: Zinnecker, Armin, Dipl.-Ing.

(56) Entgegenhaltungen:
- EP-A- 0 127 583
- WO-A-83/00602
- CH-A- 401 868
- DE-A- 2 827 522
- FR-A- 651 793
- FR-A- 820 699
- FR-A- 1 274 906
- FR-A- 1 463 773
- Offenkundige Vorbenutzung der Teigausrollmaschine ROLLFIX

## Beschreibung

Die vorliegende Erfindung bezieht sich auf ein Verfahren zum Ausrollen von Teig, wobei der Teig durch ein Teigtransportband zwischen einer festen und einer beweglichen Ausrollwalze durchgeführt wird, und nach jedem Durchgang des auszurollenden Teigbandes zwischen den Walzen die bewegliche Ausrollwalze durch ein steuerbares Mittel um eine definierte Strecke auf die feste Ausrollwalze zu bewegt wird, so dass sich der Walzenspalt zwischen den Ausrollwalzen nach jedem Teigdurchgang verringert.

Es sind Teigausrollmaschinen mit festen Transportbandantrieben bekannt zum Einsatz für einfache Ausrollarbeiten, bei welchen nur verhältnismässig grosse Enddicken des auszurollenden Teigbandes angestrebt werden. Sollen dünne Teigbänder mit solchen bekannten Ausrollmaschinen hergestellt werden, so müssen die Zustellschritte der beweglichen Teigausrollwalze durch langwierige Versuche ermittelt werden. Das Reproduzieren der einmal gefundenen Werte durch den Operateur ist problematisch. weil oft Fehleinstellungen gemacht werden. Im weiteren sind Teigausrollmaschinen mit regelbaren Transportbandantrieben, beispielsweise aus der veröffentlichten europäischen Patentanmeldung 127 583, vorbekannt. Mit solchen Teigausrollmaschinen können auch anspruchsvolle Ausrollarbeiten erledigt werden. Bedingung ist, dass entweder ein Operateur den Arbeitsablauf überwacht und diejeweils günstige Einlaufbandgeschwindigkeit einstellt, oder dass dies durch aufwendige Mess- und Regeleinrichtungen, wie in der obgenannten Veröffentlichung beschrieben, bewerkstelligt wird.

Es ist die Aufgabe der vorliegenden Erfindung, ein eingangs erwähntes Verfahren zu schaffen, welches erlaubt die Vorteile gemäss der Teigausrollmaschine, die aus der obgenannten Vorveröffentlichung vorbekannt ist, zu erzielen, ohne jedoch den grossen technischen Aufwand erbringen zu müssen, und damit eine kostengünstigere Teigausrollmaschine herstellen zu können. Die Aenderung des Walzenspaltes als Funktion der Zustellschritte soll der Teigart, dem Teigzustand usw. optimal angepasst werden können.

Dies wird nach einem ersten Vorschlag erfindungsgemäß erzielt durch die kennzeichnenden Merkmale des unabhängigen Patentanspruchs 1. Eine zweite erfindungsgemäße Lösung ist im nebengeordneten Patentanspruch 2 beschrieben.

Eine bevorzugte Ausführungsform ergibt sich durch den abhängigen Anspruch 3.

Im folgenden wird anhand der beiliegenden Zeichnung ein Ausführungsbeispiel der Erfindung sowie dessen Verwendung näher beschrieben. Es zeigen :
Fig. 1 eine schematische Seitenansicht einer automatischen Teigausrollmaschine,
Fig. 2 eine Draufsicht auf die Maschine gemäss Fig. 1,
Fig. 3 eine Ansicht des Walzenantriebes mit der oberen Teigausrollwalze in einer oberen Stellung,
Fig. 4 eine Ansicht wie Fig. 3, jedoch mit der oberen Teigausrollwalze in einer unteren Stellung,
Fig. 5 eine Seitenansicht des Walzenantriebes gemäss Fig. 3.
Fig. 6 eine Kurvenschar, wobei der Walzenspalt als Funktion der Zustellschritte aufgetragen ist,
Fig. 7 ein Blockschema der Steuerelektronik,
Fig. 8 die Bedienungs- und Anzeigeeinheit für die Teigausrollmaschine.

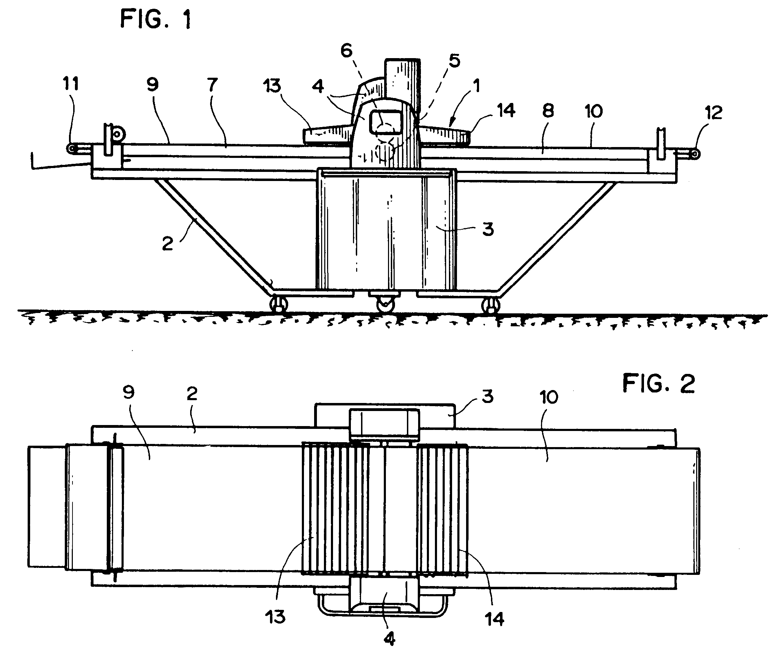

Gemäss Fig. 1 umfasst die Teigausrollmaschine 1 ein Gestell 2, an welchem ein Mittelteil 3 mit den Antriebsgehäusen 4 zum Antrieb der Teigausrollwalzen 5 und 6 vorgesehen ist. An den Antriebsgehäusen 4 sind zwei Tragkonstruktionen 7 und 8 für die Teigtransportbänder 9 und 10 befestigt. Die Transportbänder 9 und 10 laufen über äussere Transportbandwalzen 11 und 12. Das Auslaufband läuft dabei normalerweise schneller als das Einlaufband. An den Antriebsgehäusen 4 sind ebenfalls Handschutzeinrichtungen 13 und 14 angebracht.

Aus Fig. 2 ist eine Draufsicht auf die Teigausrollmaschine gemäss Fig. 1 ersichtlich.

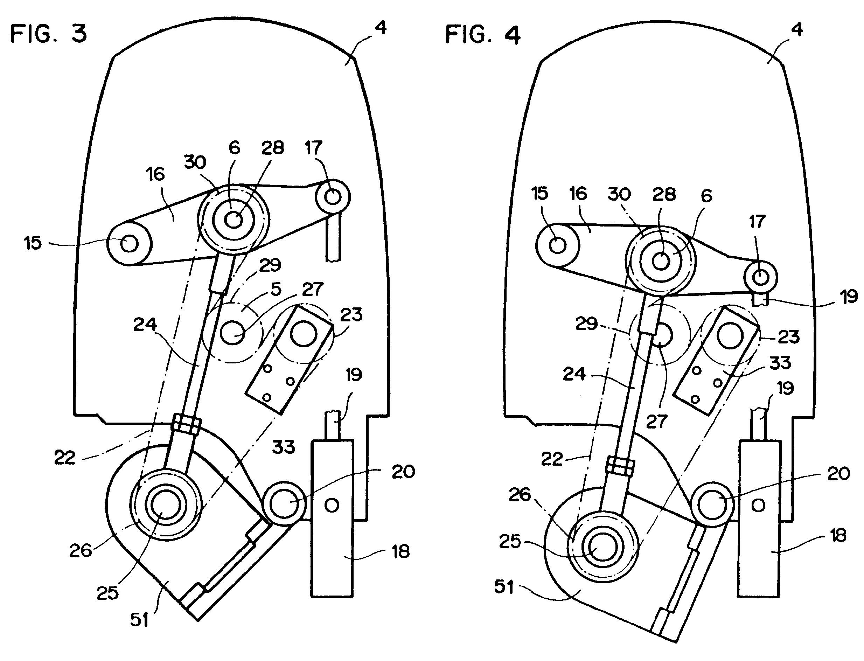

Aus den Fig. 3 und 4 ist der Walzenantrieb 4 ersichtlich, wobei gemäss Fig. 3 die obere, bewegliche Teigwalze 6 in einer oberen Stellung befindlich ist, also einen grossen Walzenspalt offenlässt, und gemäss Fig. 4 die obere Walze 6 in einerunteren Stellung befindlich ist und nur einen engen Walzenspalt zwischen unterer Walze 5 und oberer Walze 6 offenlässt. Die obere Teigwalze 6 ist an einem um einen Drehpunkt 15 drehbaren Hebel 16 befestigt An dem dem Drehpunkt 15 entgegengesetzten Ende 17 des Hebels 16 ist eine von einem Schrittmotor 18 angetriebene Spindel 19 befestigt. Anstelle des Schrittmotors könnte z.B. auch ein Gleichstrommotor mit Inkrementalgeber verwendet werden. Ein um einen Drehpunkt 20 verschwenkbarer Motor 21 mit einem Getriebe 51 treibt Ober einen Zahnriemen 22 die untere und obere Teigwalze 5 und 6 an. Der Zahnriemen 22 ist über eine Umlenkrolle 23 geführt. Mit dem Motor 21 werden auch die Teigtransportbänder 9 und 10 angetrieben. Das Getriebe 51 des Motors 21 ist mit einem verstellbaren Gestänge 24 mit dem Mittelbereich des Hebels 16 verbunden. Mitdem Gestänge 24 kann die notwendige Spannung des Zahnriemens 22 aufrechterhalten werden. Der Schrittmotor 18 zur Regulierung des Walzenspaltes wird durch einen Mikroprozessor gesteuert. Die Abgangswelle 25 vom Getriebe 51 des Motors 21 ist mit einem Zahnrad 26 verbunden, über welches der Zahnriemen 22 geführt wird. Die untere und die obere Teigwalze sind ebenfalls über ihre Achsen 27 und 28 mit je einem Zahnrad 29 resp. 30 verbunden, über welche der Zahnriemen 22 läuft. Diese Anordnung weist den Vorteil auf, dass ein einziger Zahnriemen 22 die untere und die obere Walze 5, 6 sowie das mit der Abgangswelle 25 des Getriebes 51 verbundene Zahnrad 26 umschlingt.

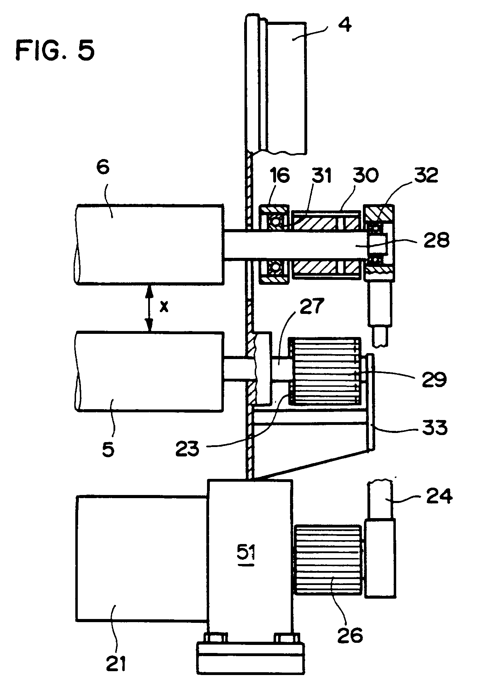

In Fig. 5 ist eine Seitenansicht des Walzenantriebes 4 gemäss Fig. 3 dargestellt. In dieser Lage befindet sich die obere Teigwalze 6 in einer oberen Stellung, der Walzenspalt x ist maximal, was der Stellung bei Beginn des Teigausrollverfahrens entspricht. Aus der teilweise im Schnitt dargestellten Seitenansicht sind noch das Lager 31 für die Antriebswelle 28 der oberen Teigwalze 6 sowie das Lager 32 für das Gestänge 24 ersichtlich.

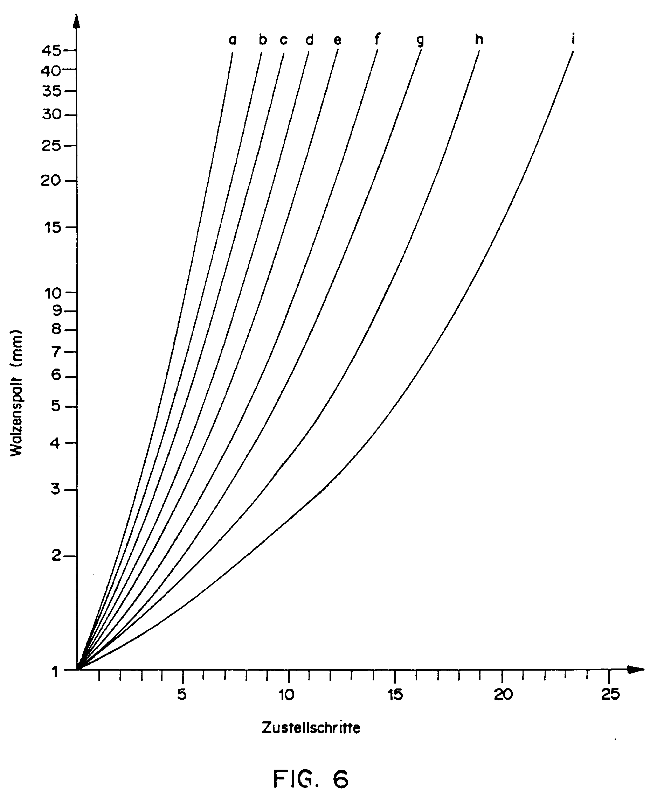

In Fig. 6 ist als abhängige Variable der Walzenspalt in mm als Funkton der Zustellschritte dargestellt. Es ist eine Kurvenschar a-i aufgetragen. Je nach Teigsorte, beispielsweise Blätterteig, Mürbeteig usw., und Teigzustand, beispielsweise gekühlt usw., wird eine der Abwalzkurven a-i mittels Tasten einer Bedienungs- und Anzeigeeinheit in die Steuerelektronik für die automatische Teigausrollmaschine eingegeben, wobei dann ein Mikroprozessor der Steuerelektronik den Schrittmotor 18 für die Walzenspaltregulierung entsprechend steuert. Das Verhältnis eines Walzenspaltes zum nächst kleineren Walzenspalt wird als Abwalzgrad bezeichnet und nimmt mit fortschreitender Teigausrollung ab. Das Verhältnis kann nach jedem Schritt kleiner werden oder aber abwechslungsweise während mindestens zwei Schritten gleich bleiben oder nach dem vorderen Schritt kleiner werden. Zuerst werden grössere und mit zunehmendem Ausrollen des Teiges Kleinere Abwalzgrade gewählt Wenn die Maschine mit der Kurve a gesteuert wird, so sind am wenigsten Schrille zum Ausrollen des Teiges notwendig. Bei der Steuerung mit der Kurve i sind am meisten Schritte erforderlich. Alle Kurven weisen jedoch fallende Abwalzgrade auf. Zwischen diesen Minimal- und Maximalkurven kann eine dem Teig angepasste Kurve b-h gewähltwerden.

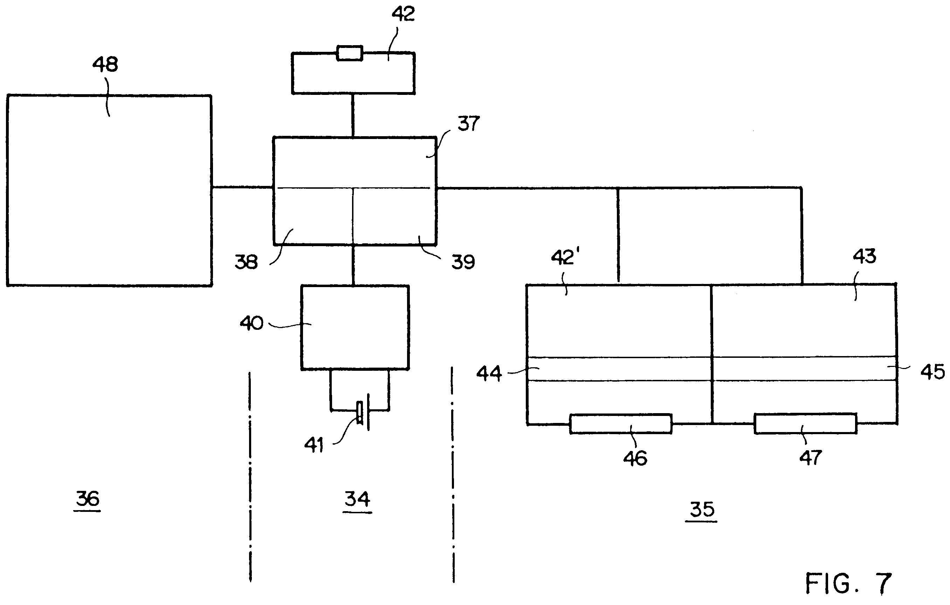

In Fig. 7 ist ein Blockschema der Steuerelektronik dargestellt. Die Steuerelektronik zur Steuerung des Walzenspaltes umfasst im wesentlichen einen Mikroprozessor-Print 34, einen Eingang/Ausgang-Print 35 sowie einen Front-Print 36. Der Mikropozessor-Print (µP-Print) umfasst den Mikroprozessor 37, einen Adressendecodierer 38, einen programmierbaren Festspeicher (PROM) 39, eine mit den vorgenannten drei Elementen verbundenen Anwender-Programmierspeicher (Direktzugriffsspeicher oder RAM) 40, eine Stützbatterie 41 für den RAM sowie eine Speisung 42. Die Elemente 37, 38 und 39 sind mit Ausgängen 42' und Eingängen 43 der Eingangs/Ausgang-Einheit (I/O-Print 35) verbunden. Die Ausgänge 42' und 43 sind je über eine galvanische Trennung 44 resp. 45, beispielsweise einem Optokoppler, mit einem Anschlussstecker 46 resp. 47 verbunden. Die Elemente 37, 38 und 39 sind andererseits mit einer Bedienungs- und Anzeigeeinheit 48 verbunden. Am Eingang 43 erfolgt z.B. die Meldung von einer Lichtschranke, dass das Teigband zwischen den Ausrollwalzen hindurchgelaufen ist.

Es können teigkonforme Zustellschrittabläufe gespeichert werden, welche dann vom Anwender abgerufen werden können.

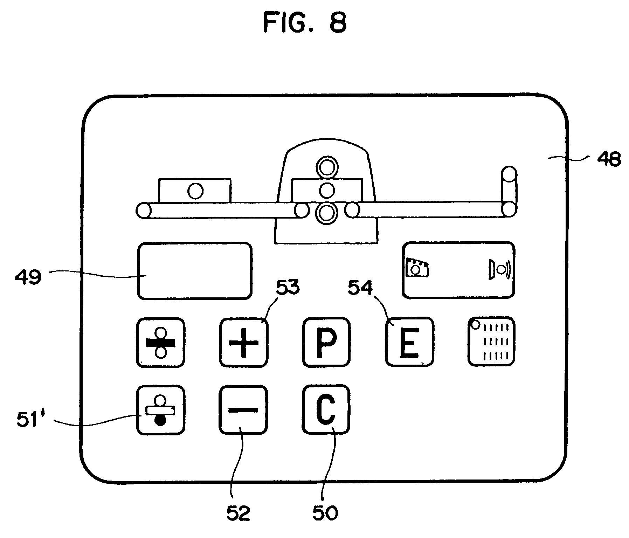

In Fig. 8 ist die Bedienungs- und Anzeigeeinheit 48 der Steuerungselektronik dargestellt. Sie umfasst eine Datenanzeigeeinrichtung (Display) 49 sowie mehrere Tasten 50, welche das Einstellen von 20 Programmen ermöglichen.

Es lassen sich u.a. zwölf verschiedene Abwalzkurven, der Anfangswalzenspalt und der Endwalzenspalt programmieren.

Die Steuerung (Microprozessor) berechnet die auszuführenden Schritte für die obere bewegliche Teigwalze 6 und gibt die entsprechenden Befehle an den Walzenschrittmotor 18. Die Berechnung erfolgt vom Endwalzenspalt aus.

Der Endwalzenspalt kann sich ändernden Teigzuständen angepasst werden, ohne dass diese Korrekturen fest ins Programm übernommen werden. Die Tastenfolge zur Aenderung des Endwalzenspaltes ist dabei 51, 52 oder 53, 54.

## Patentansprüche

1. Verfahren zum Ausrollen von Teig, wobei der Teig durch ein Teigtransportband zwischen einer festen und einer beweglichen, sich im Abstand voneinander befindlichen Ausrollwalze durchgeführt wird und nach jedem Durchgang des auszurollenden Teigbandes zwischen den Walzen die bewegliche Ausrollwalze durch ein steuerbares Verstellorgan um einen definierten Schritt auf die feste Ausrollwalze zu bewegt wird, so daß sich der Abstand zwischen den Ausrollwalzen nach jedem Teigdurchgang auf einstellbare Weise verringert,
dadurch gekennzeichnet,
daß das Verhältnis, gebildet aus einem Walzenabstand zum nächst kleineren Walzenabstand nach jedem Schritt kleiner wird.

2. Verfahren zum Ausrollen von Teig, wobei der Teig durch ein Teigtransportband zwischen einer festen und einer beweglichen, sich im Abstand voneinander befindlichen Ausrollwalze durchgeführt wird und nach jedem Durchgang des auszurollenden Teigbandes zwischen den Walzen die bewegliche Ausrollwalze durch ein steuerbares Verstellorgan um einen definierten Schritt auf die feste Ausrollwalze zu bewegt wird, so daß sich der Abstand zwischen den Ausrollwalzen nach jedem Teigdurchgang auf einstellbare Weise verringert,
dadurch gekennzeichnet,
daß das Verhältnis, gebildet aus einem Walzenabstand zum nächst kleineren Walzenabstand während mindestens zwei Schritten gleich bleibt und dann wieder kleiner wird, so daß dieses Verhältnis mit fortschreitender Teigausrollung nicht ansteigt.

3. Verfahren nach Anspruch 1 oder 2, dadurch gekennzeichnet, daß das steuerbare Verstellorgan durch eine programierbare Steuerelektronik gesteuert wird.

## Claims

1. Method for rolling out dough, the dough being led by a dough-conveyor belt between a fixed and a movable dough roller located at a distance to each other, and after each pass of the strip of dough to be rolled out between the rollers, the movable dough roller being moved a specific distance toward the fixed dough roller by a controllable adjusting means, so that the gap between the roll-out cylinders decreases in an adjustable way after each pass of the dough,
characterized in that
the ratio of one roller spacing to the next smaller roller spacing becomes smaller after each step.

2. Method for rolling out dough, the dough being led by a dough-conveyor belt between a fixed and a movable dough roller located at a distance to each other, and after each pass of the strip of dough to be rolled out between the rollers, the movable dough roller being moved a specific distance toward the fixed dough roller by a controllable adjusting means, so that the gap between the roll-out cylinders decreases in an adjustable way after each pass of the dough,
characterized in that
the ratio of one roller spacing to the next smaller roller spacing remains the same for at least two steps and then becomes smaller again so that this ratio does not increase with progressive rolling out of the dough.

3. Method according to claim 1 or 2, characterized in that the controllable adjusting means is controlled by programmable control circuitry.

## Revendications

1. Procédé pour étendre de la pâte, dans lequel la pâte est conduite par une bande transporteuse de pâte entre un rouleau fixe et un rouleau mobile se trouvant à distance l'un de l'autre, et après chaque passage de la bande transporteuse de pâte étendue entre les rouleaux, le rouleau mobile est déplacé vers le rouleau fixe, d'un pas défini, par un organe de déplacement commandable, afin que la distance entre les rouleaux soit diminuée de manière réglable après chaque passage de la pâte, caractérisé en ce que le rapport représentant une distance entre rouleaux à une distance suivante plus petite, soit plus petit après chaque pas.

2. Procédé pour étendre de la pâte, dans lequel la pâte est conduite par une bande transporteuse de pâte entre un rouleau fixe et un rouleau mobile se trouvant à distance l'un de l'autre, et après chaque passage de la bande transporteuse de pâte étendue entre les rouleaux, le rouleau mobile est déplacé vers le rouleau fixe, d'un pas défini, par un organe de déplacement commandable, afin que la distance entre les rouleaux soit diminuée de manière réglable après chaque passage de la pâte, caractérisé en ce que le rapport représentant une distance entre rouleaux à une distance suivante plus petite, reste le même durant au moins deux pas et diminue à nouveau ensuite, afin que ce rapport n'augmente pas avec l'extension de la pâte.

3. Procédé selon l'un des revendications 1 ou 2, caractérisé en ce que l'organe de déplacement commandable est commandé par une électronique de commande programmable.
